(19) Europäisches Patentamt
European Patent Office
Office européen des brevets

(11) **EP 3 501 643 A1**

(12) **EUROPEAN PATENT APPLICATION**

(43) Date of publication:
26.06.2019 Bulletin 2019/26

(21) Application number: 18211970.1

(22) Date of filing: 12.12.2018

(51) Int Cl.:
$B01J\ 35/00$ (2006.01)
$B01J\ 23/00$ (2006.01)
$B01J\ 21/06$ (2006.01)
$B01J\ 35/02$ (2006.01)
$B01J\ 37/10$ (2006.01)
$C09C\ 1/36$ (2006.01)
$B01J\ 21/16$ (2006.01)
$B01D\ 53/86$ (2006.01)
$B01J\ 23/02$ (2006.01)
$B01J\ 35/10$ (2006.01)
$B01J\ 37/03$ (2006.01)
$C04B\ 14/30$ (2006.01)
$C01G\ 23/00$ (2006.01)
$B01J\ 37/06$ (2006.01)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **15.12.2017 IT 201700145181**

(71) Applicant: **ITALCEMENTI S.p.A.**
**24126 Bergamo (IT)**

(72) Inventors:
• **CACCIATORE, Andrea**
**I-72100 Brindisi (IT)**
• **MARCHI, Maurizio Iler**
**I-20066 Melzo (MI) (IT)**
• **GROSS, Silvia**
**I-35137 Padova (IT)**
• **DENGO, Nicola**
**I-35010 Santa Giustina in Colle (PD) (IT)**

(74) Representative: **Gerli, Paolo**
**Botti & Ferrari S.r.l.**
**Via Cappellini, 11**
**20124 Milano (IT)**

(54) **PHOTOCATALYTIC COMPOSITE BASED ON KASSITE AND PEROVSKITE AND CEMENTITIOUS PRODUCTS CONTAINING IT**

(57) A new photocatalytic composite is described, consisting of mixtures of calcium titanates Kassite and Perovskite. The composite is obtained by hydrothermal reaction of a suitable precursor of titanium dioxide with a basic solution and in the presence of limestone, in particular amounts and concentrations, followed by recovery of the product and drying. Such composites, free from titanium dioxide, showed a high synergistic photocatalytic activity, higher than the photocatalytic activity measured for the respective pure phases.

EP 3 501 643 A1

**Description**

FIELD OF THE INVENTION

The present research is in the field of photocatalytic materials, useful for the decontamination from environmental pollutants and obtained by hydrothermal synthesis.

PRIOR ART

The use of titanium dioxide ($TiO_2$)-based photocatalysts for the decomposition of environmental pollutants is widely known. In the field of cementitious materials, the use of such photocatalysts has the double purpose of oxidizing nitrogen oxides (NOx) present in the atmosphere to $NO^{3-}$ and of ensuring self-cleaning properties to the surfaces thereof.
In the attempt to improve the capability of decomposing environmental pollutants and of optimizing production processes and production costs, several attempts have been made in the years aimed to the synthesis of photocatalysts supported by mineral components. An example of such products is titanium dioxide supported on metakaolin described in patent applications WO2009/080647, or titanium dioxide supported on limestone, through which two photocatalytic calcium titanates were synthesized, described for the first time in the patents applications WO2010/012488 A1 and WO2010/012489 A1.
As reported in the paper *"Controllable synthesis of $CaTi_2O_4(OH)_2$ nanoflakes by a facile template-free process and its properties"* the use of Kassite ($CaTi_2O_4(OH)_2$) as photocatalyst is known since 2013 (Weixia dong, Bin Song, Gaoling Zhao, Ceramics International 39, 2013, 6795-6803). In said paper a process of hydrothermal synthesis is described which simplifies the production process of Kassite nanoflakes and wherein the process of crystal growth is ruled by continuous crystallization-dissolution-recrystallization phenomena which are characteristic of the process. In the typical synthesis indicated in the paper, ethanol is added dropwise to a butyl titanate (TBOT) solution, which is subsequently added to a calcium chloride ($CaCl_2*2H_2O$) solution, forming a colloidal suspension; said suspension is put under agitation for several minutes while adding sodium hydroxide (NaOH) to control pH. The solution obtained is heated in autoclave for several hours; the treatment time influences the crystallinity of the final product.
The measurement of photocatalytic activity is carried out by quantifying the bleaching of an aqueous solution of methyl orange (MO) irradiated by UV light wherein Kassite in the form of powder is put in agitation.
The parameters which seem to influence the photocatalytic activity of the synthesized compound are:

- **Degree of crystallinity:** the higher is the crystallinity of the final product, the smaller are the defects of the lattice; the absence of defects inhibits the recombination of the photoelectron with the hole formed following UV irradiation with consequent increase of the photocatalytic activity (high frequency).

- **Surface area:** the wider is the surface area, the more are the active sites available for the reaction and the higher is the absorption of methyl orange molecules with consequent increase of photocatalytic activity.

- **Pore size:** the smaller is their size, the smaller is the distance which separates the respective walls with consequent improving of MO molecules absorption and therefore of the photocatalytic activity.

The compound described in the above-mentioned paper has nano size, which are typical of the commercial photocatalytic compounds.
The studies concerning Perovskite ($CaTiO_3$) synthesis are known in the literature for several years, but there are still controversial data about its photocatalytic properties.
In patent application WO2010/012489 A1 a photocatalytic composite comprising calcium titanate supported on limestone is described, wherein the calcium titanate is in two crystalline phases with empirical formula $CaTi_5O_{11}$ (CT5) and $CaTi_2O_5$ (CT2) and traces of Perovskite which is not mentioned as photocatalytically active.
In the literature, the term "perovskite structures" is also used more widely to identify semiconductors of general formula $MTiO_3$, wherein M represents elements as Ca, Sr, Ba and Pb; such structures are occasionally associated to photocatalytic effects; for example, in the paper *"Garden-like perovskite superstructures with enhanced photocatalytic activity"* (Meidan Ye, Mengye Wang, Dajiang Zheng, Nanoscale, 2014, 6, 3576), data of photocatalytic activity of perovskite structures are shown which were obtained evaluating methylene blue (MB) degradation in particular irradiation conditions; the data highlight that, in such particular operative conditions, the degradation rate of MB follows the following order: $SrTiO_3 > PbTiO_3 > CaTiO_3$.
There are currently a few commercial applications of photocatalytic materials different from titanium dioxide; it is in fact difficult to find materials that show a high photocatalytic activity, such as to be commercially useful, and that do not contain toxic components such as e. g. heavy metals. Possible increases of photocatalytic activity have been obtained by strongly increasing the surface area of the photocatalyst, i.e. by decreasing the particle thereof to nano size; however, this entails a high energy consumption and production cost; moreover, not all the photocatalytic materials are suited for such a strong comminution. Thus, there is still a largely unfulfilled need for new photocatalytic products, which are different from titanium dioxide and have high photocatalytic activity, in order to have a concrete commercial application, which do not contain toxic components, and which implicate a reduced production cost.

## SUMMARY

The Applicant has long been involved in researches aimed to identify new photocatalysts incorporated in support materials, with the aim to obtain materials with different and/or ameliorative effects compared to known products. During such researches it was unexpectedly found out that the reaction between titanium oxysulphate and limestone, obtained by a particular process of hydrothermal synthesis described herein, results in new composite materials having a strong photocatalytic activity, thanks to an intense and unexpected synergistic interaction between Kassite and Perovskite contained therein. Such composites showed a high photocatalytic activity which makes them commercially competitive toward the products existing on the market.

In particular, a set of new photocatalytic composites has been obtained, said composites having microcrystalline structure, being free of titanium dioxide and limestone and containing calcium titanate in the two phases of Perovskite and Kassite, in weight ratios variable between 15:85 and 85:15: such composites showed an unexpected synergistic activity, i.e. higher than the sum of the contributions provided by the respective pure phases. It was also noticed that the incorporation of the two phases in the form of composite according to the invention was unexpectedly critical. Advantageously, the present composites provide photocatalysis levels typical of nanometric materials, even if they have micrometric size and smaller surface area; the less strong miniaturization allows to reduce the time/energy consumption of the production process for the benefit of a lower cost of the finished composite. The micrometric granulometry further involves, in comparison to finer granulometries, a better packing of the powder and a reduced absorption of humidity, to the benefit of a better fluidity: these characteristics are of particular interest when the composite is used as an ingredient of compositions, e.g. cementitious compositions, which contain it: the higher fluidity of the powder allows its simpler handling throughout the different phases of the process.

## DESCRIPTION OF THE DRAWINGS

Fig. 1: Diffractogram of the composite CaTi001 according to the invention

Fig. 2: Diffractogram of the composite CaTi002 according to the invention

Fig. 3: Diffractogram of the reference product CaTi003 (99% Kassite)

Fig. 4: Diffractogram of the reference product CaTi004 (99% Perovskite)

Fig. 5: TEM image of the composite CaTi001

Fig. 6: TEM image of the composite CaTi002

## DETAILED DESCRIPTION

The present photocatalytic composite comprises calcium titanate in the phases of Kassite and Perovskite.
By Kassite is meant a crystalline chemical compound containing calcium and titanium, which are present in a molar ratio 1:2, the compound having empirical formula $CaTi_2O_4(OH)_2$. The crystalline structure was described by Grey et al. American Mineralogist 2003 88 1331-1335. The characteristic X ray diffraction peaks were indexed with monoclinic space group P21/a and cell parameters a 5.270 b 9.014 c 9.56 beta 90.37.
By Perovskite is meant a crystalline chemical compound containing calcium and titanium, which are present in a molar ratio 1:1, the compound having empirical formula $CaTiO_3$. The crystalline structure was described by Beran et. al, Canadian Mineralogist, 1996, 34, 803-809. The characteristic peaks were indexed with orthorhombic space group Pbnm and cell parameters a 5.411 b 5.493 c 7.673. The microstructural characteristics of the pure phases of Kassite and Perovskite and of the composites of the invention which contain them are widely explained in the experimental part.
In the present new composites the weight ratio between Kassite and Perovskite (K:P ratio) is variable between 15:85 and 85:15, e.g. between 40:60 and 60:40, or between 45:55 and 55:45. In a non-limiting way, specific, particularly preferred composites have a K:P ratio of 53:47 and 81:19.

According to the present invention, the term "composite" defines a product wherein Kassite and Perovskite crystals are not totally free, as it is the case of a physical dried mixture of the corresponding powders; the difference of photocatalytic activity of the present composites compared to the physical mixtures of the respective components is highlighted in the experimental part. In the present composites, the particles constituting the different phases are present in forms variably aggregated with each other, as a consequence of the fact that the product derives from a hydrothermal reaction with total consumption of the precursors and recovery and drying of only one material aggregated in solid form. Thus, the term "composite" indicates an aggregation between the particles of the components "at a statistical level", without excluding that some isolated particles of one or another of its constituents may still be recognized.

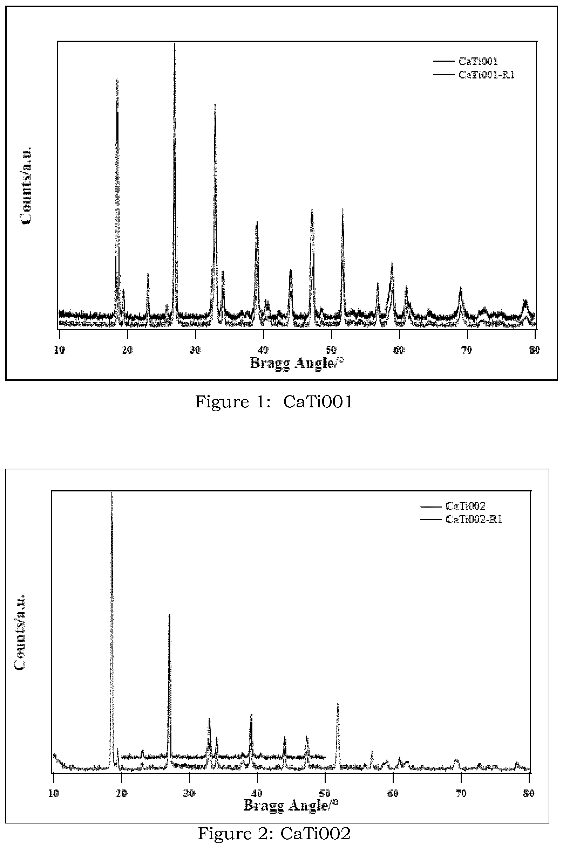

Further, as showed by X ray diffraction spectrometry analysis (XRPD), the present composites did not show the characteristic peaks of other forms of calcium titanate, such as the phases with empirical formula $CaTi_5O_{11}$ (CT5) and $CaTi_2O_5$ (CT2) characteristic of the composite described in WO2010/012489. Therefore the composite of the invention can be further characterized as free from additional forms of calcium titanate, especially the phases with empirical formula $CaTi_5O_{11}$ (CT5) and $CaTi_2O_5$ (CT2): in fact the XRPD spectra of the present composites (Figures 1-2) show a peak pattern which is totally different from the one known for the composites described in WO2010/012489: this confirms not only the absence of the above-mentioned phases CT2 and CT5, but also the formation of a totally different crystalline lattice.

As further highlighted by TEM microscopy observations contained in the experimental part, the synthesized composites have microcrystalline structure, i.e. crystalline grain size generally between about 0,5 and 20 $\mu$m, preferably between 0,5 and 10 $\mu$m or between 1 and 8 $\mu$m; it is understood that, as we deal with a complex composite material, the size distribution of the particles can be relatively wide; therefore the above-mentioned ranges of crystalline grain sizes are not to be understood in an exclusive way, as it cannot be excluded in advance the formation of small amounts of crystals whose sizes lie beyond the above mentioned ranges, being substantially irrelevant on the total photocatalytic activity of the composite.

An indirect, but statistically more effective, evaluation of the size distribution of the particles constituting the composite is provided by the values of BET surface area, which inversely correlate with the mean size of the particles. Such BET surface areas of the subject composites range generally between 1 e 100 $m^2$/g, with preferred values between 3 and 30 $m^2$/g, for example between 4 and 15 $m^2$/g. The preference for the lower ranges is based on the observation that for the present composites, contrary to what would be commonly expected, the photocatalytic activity tends to increase as the specific surface decreases.

A further object of the invention is a process for preparing the composites as defined above. It comprises the following steps:

i) contacting calcium carbonate with an aqueous solution of sodium hydroxide and then with an aqueous solution of titanium oxysulphate;

ii) heating the product resulting from i) for a period between 1 and 96 hours (preferably between 5 and 48 hours, e.g. about 24 hours) at a temperature between 50 and 300°C (preferably between 100 and 200°C, more preferably between 140 and 160°C, e.g. 150°C);

iii) recovering the solid product resulting from ii), washing it with deionized water and subjecting it to drying (preferably under vacuum at room temperature).

In said process, at least the step ii) is carried out in a closed reactor such as e.g. an autoclave.

Compared to the traditional hydrothermal syntheses from precursors of titanium dioxide (which typically occur at more than 600°C at room pressure), the present process in particular distinguishes for a relatively low heating temperature; moreover, heating in autoclave allows to work at a higher pressure than the atmospheric pressure, generally between 2 and 10 bar, preferably between 3 and 7 bar, e.g. 5 bar.

Moreover, the present process is characterized by the use of particular ratios and concentrations of the reagents; specifically in the reaction mixture upon completion of step i):

(a) the molar ratio titanium oxysulphate:calcium carbonate (Ti:Ca ratio) is between 15:1 and 40:1

(b) the concentration of calcium carbonate is less than 0,1 M (preferably between 0,01 and 0,1 M)

(c) the concentration of NaOH is equal to or higher than 1 M (preferably between 1 and 4 M);

(d) the concentration of titanium oxysulphate is between 0,2 and 0,8 M.

Further object of the invention are cementitious compositions and articles of manufacture with photocatalytic activity, comprising the photocatalytic composite described above. In the case of articles of manufacture, the composite can be present as uniformly dispersed in the mass of the article of manufacture and/or can be stratified on one or more of its surfaces.

The tight interconnection among the components of the mixtures allows to obtain a clear advantage in terms of photocatalytic activity compared to the single phases.

Despite the lack of titanium dioxide, the "absolute" photocatalytic activity of the composites (expressed in terms of NOx abatement) was found to be similar to that of equivalent commercial products containing the best known photocatalyst (AHP 200).

The invention is further disclosed by way of the following non-limiting examples.

## EXPERIMENTAL PART

### EXAMPLE 1: *Synthesis of the photocatalytic composites and of the pure phases*

The typical synthesis procedure envisages the introduction of an adequate calcium carbonate amount (see Table 1) into a container A255AC in PTFE (Parr Instrument Company), followed by a NaOH solution at known concentration. The mixture is subjected to vigorous agitation and a titanium oxysulphate solution is then added dropwise (see Table 1). The suspension obtained is then let under agitation for some minutes and is then sealed in a stainless-steel autoclave (General Purpose Acid-Digestion Bomb, 4745, Parr Instrument Company). The autoclave is then heated in an oven at 150°C for 24 hours.

The resulting products were isolated by centrifugation and washed four times with deionized water (with centrifugation after each washing step). The powders isolated are then dried at room temperature under vacuum.

Table 1

| Samples | Composition | CaCo3 | TiOSO4 | | NaOH | |
| --- | --- | --- | --- | --- | --- | --- |
| | | | Concentration | Volume | Concentration | Volume |
| CaTi001 | 53 Kassite - 47 Perovskite | 0,031 g | 0,2 g/ml | 5 ml | 0,2 g/ml | 5 ml |
| CaTi002 | 81 Kassite - 19 Perovskite | 0,018 g | 0,2 g/ml | 5 ml | 0,2 g/ml | 5 ml |
| CaTi003 | 99 Kassite - 1 Perovskite | 0,090 g | 0,2 g/ml | 25 ml | 0,04 g/ml | 25 ml |
| CaTi004 | 1 Kasite - 99 Perovskite | 0,200 g | 0,2 g/ml | 5 ml | 0,2 g/ml | 5 ml |

In the case of CaTi004, the product obtained after washing is further treated with 25 ml HCl (1M solution) under vigorous agitation for 80 minutes until no further gas development can be detected. The resulting product was then centrifuged and washed with deionized water two further times until the decanted water has reached neutral pH again. The isolated compound was then dried as described above.

### EXAMPLE 2: Microstructural Characterization

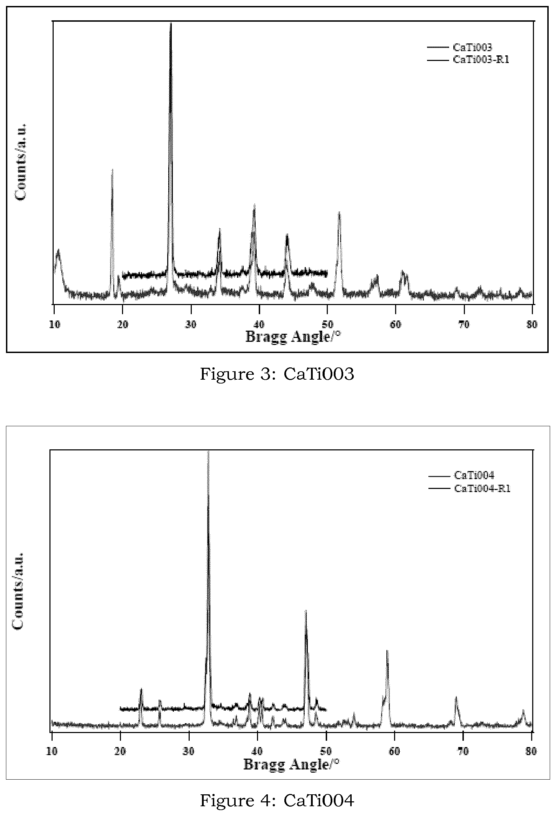

The product CaTi001 obtained in Example 1, subjected to diffractometric analysis and shown in Figure 1 (Bruker D8 Advance diffractometer, with Göbel mirror and using CuKa radiation) was found to be a polyphasic composite composed of Kassite and Perovskite with ratios of about 50:50 in m/m. The product CaTi002 obtained in Example 1, subjected to diffractometric analysis in the same conditions and depicted in Figure 2, was found to be a polyphasic composite composed of Kassite and Perovskite with ratios of about 80:20 in m/m (excess of Kassite). The reference product CaTi003 obtained in Example 1, subjected to diffractometric analysis in the same conditions and depicted in Figure 3, was found to be a substantially pure Kassite phase (Kassite and Perovskite in ratios of about 99:1 in m/m). The reference product CaTi004 obtained in Example 1, subjected to diffractometric analysis in the same conditions and depicted in Figure 4, was found to be a substantially pure Perovskite phase (Kassite and Perovskite in ratios of about 1:99 in m/m).

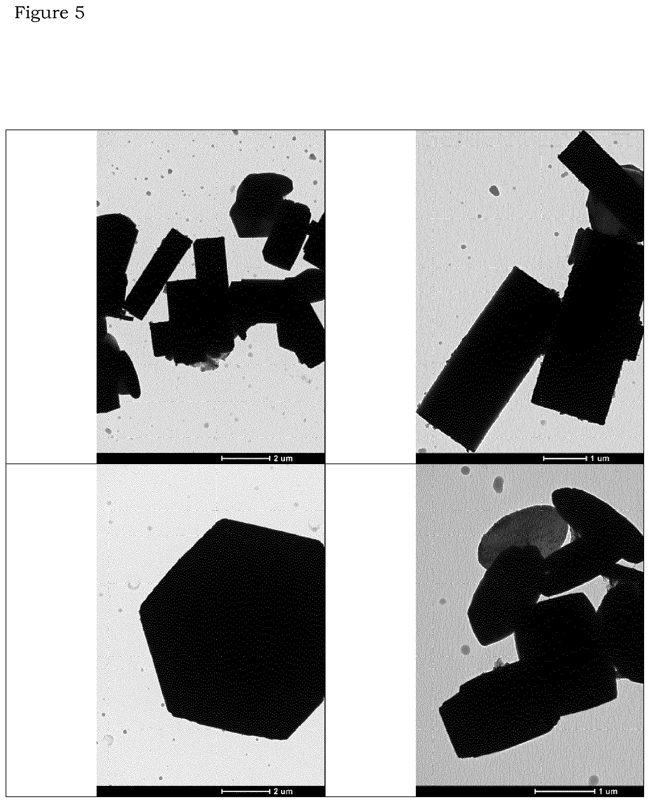

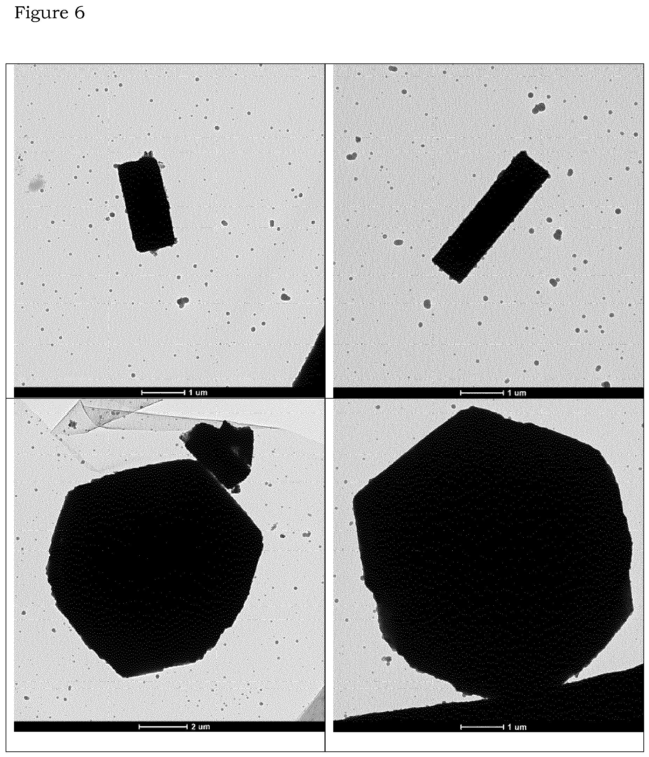

To characterize the type of the sample and to confirm the dimensional data obtained from the microstructural measurements, transmission electron microscopy (TEM) analyses were performed. The images of the samples CaTi001 and CaTi002 depicted in Figures 5 and 6 show the formation of aggregated structures comprising plate-shaped crystals, compliant with the known crystalline form of Kassite, and parallelepiped-shaped crystals, compliant with the known crystalline structure of Perovskite. Said aggregates have sizes in the order of a few micrometers.

**EXAMPLE 3: Analysis of specific BET surface**

The values measured during the analysis showed a correlation between the specific surface and the crystallite sizes evaluated through the microstructural and morphological measurements; the values obtained are showed in Table 2.

Table 2

| Sample | Composition | Specific surface |
|--------|-------------|------------------|
| CaTi001 | 53 Kassite - 47 Perovskite | 6 $m^2$/g |
| CaTi002 | 81 Kassite - 19 Perovskite | 12 $m^2$/g |
| CaTi003 | 99 Kassite - 1 Perovskite | 20 $m^2$/g |
| CaTi004 | 1 Kassite - 99 Perovskite | 3 $m^2$/g |

**EXAMPLE 4: Photocatalytic activity on powder. Measurements of NOx abatement**

The photocatalytic activity of the samples obtained by the hydrothermal process was experimentally ascertained in tests of abatement of nitrogen oxides NOx performed according to the indications of UNI 11247 standard (specific for cementitious materials and not for powders).

The samples in the form of powder, whose photocatalytic characterizations are reported in the example, were placed inside a (3 liters volume) reaction chamber which can be irradiated by a UV lamp which has, at the level of the sample, an irradiance spectrum in UV band ($\lambda$< 400 nm) consisting primarily of the line at 365 nm of mercury (irradiance integrated at $\lambda$< 350 nm has to be 10% lower than the irradiance integrated between 350 nm and 400 nm).

The irradiation system should allow a mean irradiance (in UV-A band) equal to $20\pm1$ W/$m^2$ on the surface of the sample (of 64 $cm^2$) during test execution.

In the procedure in continuum according to UNI 11247 the supply flow, equal to 1,5 liters/min, contains a NOx amount of 0,55 ppm (of which $NO_2$=0,15ppm and NO=0,4ppm).

The concentration of NOx present in the gas which pass through the reactor is measured in the dark during the first step of the test ($C_B$) and by irradiating the sample with UV light during the second step ($C_L$).

The difference in NOx concentration measured between the two steps allows to calculate the dimensionless photocatalytic abatement index Ac, as reported below:

$$Ac = 100 \text{ x } [(C_B - C_L)/C_B] \text{ x } (I_N/I_{IR}) \text{ x } (S_N/S_A)$$

wherein:

$A_C$ = dimensionless photocatalytic abatement index in test condition (%).

$C_B$ = concentration of NOx exiting the reactor in the dark (ppb).

$C_L$ = concentration of NOx exiting the irradiated reactor (ppb).

$I_{IR}$ = mean irradiance measured and possibly corrected (W $m^{-2}$).

$I_N$ = nominal irradiance (20 W $m^{-2}$).

$S_A$ = measured sample area ($64\pm6$ $cm^2$).

$S_N$ = nominal sample area (64 $cm^2$).

The samples in the form of powder synthesized for performing the photocatalytic tests were prepared by previously mixing the photocatalysts with a non-reactive solvent (e.g. 2-Propanol); the suspensions obtained were poured in Petri dishes which were subsequently subjected to a drying process, allowing to obtain stable films of the photocatalysts, suitable for testing. Table 3 indicates the Ac values obtained.

Table 3

| Sample | Composition | Ac |
|---|---|---|
| CaTi001 | 53 Kassite - 47 Perovskite | ~ 30 % |
| CaTi002 | 81 Kassite - 19 Perovskite | ~ 28 % |
| CaTi003 | 99 Kassite - 1 Perovskite | ~ 10 % |
| CaTi004 | 1 Kassite - 99 Perovskite | ~ 9 % |
| CaTi003+CaTi004 | 50 Kassite - 50 Perovskite | ~ 10 % |
| AHP200 | 100 TiO2 | ~30 % |

It is noticed that the photocatalytic activity of the composites of the invention is definitely higher than the contribution of the respective pure phases, or of the simple physical mixtures thereof; this clearly highlights the synergistic action of Kassite and Perovskite only when combined in the composites of the invention. In particular, compared to the corresponding pure phases or physical mixtures, the composites of the invention showed an extraordinary high photocatalytic activity (about 3 times higher). Said increase of activity is even more surprising considering that the specific surface of the composites CaTi0001 and CaTi0002 of the invention is much lower in comparison to the reference CaTi0003 (consisting for 99% of photocatalytically active Kassite, see Table 2). Finally, an increase in photocatalytic activity is observed when moving from CaTi002 to CaTi001 although the specific surface decreases (see Table 2): such unexpected effect is not biased by the different ratios between Kassite and Perovskite in the two samples, since the respective pure phases (Tab. 3) show substantially equal photocatalytic activities. It is further observed that, despite the lack of titanium dioxide, the "absolute" photocatalytic activity of the composites CaTi001 and CaTi002 was substantially equal to that of the available commercial product AHP 200, consisting of 100% titanium dioxide.

As a whole, these data prove that a synergistic composite with high photocatalytic activity was obtained, having low specific surface and with crystals having average micrometric sizes.

## Claims

1. Photocatalytic composite, free from titanium dioxide and limestone, having microcrystalline structure, comprising Kassite ($CaTi_2O_4(OH)_2$) and Perovskite ($CaTiO_3$), with a weight ratio Kassite:Perovskite between 15:85 and 85:15.

2. Composite according to claim 1, wherein the weight ratio Kassite:Perovskite is between 40:60 and 60:40.

3. Composite according to any claims 1-2, having a BET surface area between 1 and 100 $m^2$/g.

4. Composite according to any claims 1-3, having a BET surface area between 3 and 30 $m^2$/g.

5. Composite according to any claims 1-4, having a BET surface area between 4 and 15 $m^2$/g.

6. Process for preparing a composite as described in claims 1-5, comprising the steps of:

   i) contacting calcium carbonate with an aqueous solution of sodium hydroxide and then with an aqueous solution of titanium oxysulphate;
   ii) heating the product resulting from i) for a period between 1 and 96 hours, at a temperature between 50 and 300°C;
   iii) recovering the solid product resulting from ii), washing it with deionized water and subjecting it to drying,

   wherein at least step ii) is carried out in a closed reactor, and furthermore:

   a) the molar ratio titanium oxysulphate: calcium carbonate is between 15:1 and 40:1;
   b) the concentration of calcium carbonate is less than 0,1 M;
   c) the concentration of NaOH is equal to or higher than 1 M;
   d) the concentration of titanium oxysulphate is between 0,2 and 0,8 M.

7. Process according to claim 6, wherein the temperature in step ii) is between 100 and 200°C.

8. Process according to any claims 6-7, wherein the temperature in step ii) is between 140 and 160°C.

9. Process according to any claims 6-8, wherein in step iii) the product is washed from 3 to 5 times.

10. Process according to any claims 6-9, wherein in step iii) the product is dried at a room temperature under vacuum.

11. Cementitious composition or cementitious article of manufacture, comprising the photocatalytic composite as described in claims 1-5.

12. Use of a composite, composition or article of manufacture as described in claims 1-5, 11, as photocatalyst.

13. Use according to claim 12, for reducing N-oxides present in the atmosphere.

Figure 1: CaTi001

Figure 2: CaTi002

Figure 3: CaTi003

Figure 4: CaTi004

Figure 5

Figure 6

**EP 3 501 643 A1**

## EUROPEAN SEARCH REPORT

Application Number

EP 18 21 1970

Europäisches Patentamt
European Patent Office
Office européen des brevets

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | YI-JEN HUANG ET AL: "Artificial Synthesis of Platelet-Like Kassite and Its Transformation to CaTiO3", CRYSTAL GROWTH & DESIGN., vol. 10, no. 3, 5 February 2010 (2010-02-05), pages 1221-1225, XP055501380, US ISSN: 1528-7483, DOI: 10.1021/cg901204x * page 1221, left-hand column, paragraph 1 * * page 1221, right-hand column, paragraph Exp. Section - page 1223, left-hand column, paragraph 1; figures 1,2,4,8; tables 1,2 * | 1-10 | INV. B01J35/00 B01D53/86 B01J23/00 B01J23/02 B01J21/06 B01J35/10 B01J35/02 B01J37/03 B01J37/10 C04B14/30 C09C1/36 C01G23/00 ADD. B01J21/16 B01J37/06 |
| X | WEIXIA DONG ET AL: "Solvothermal Preparation of CaTiO3 Prism and CaTi2O4(OH)2 Nanosheet by a Facile Surfactant-Free Method", MEDZIAGOTYRA - MATERIALS SCIENCE, vol. 21, no. 4, 30 November 2015 (2015-11-30), XP055501609, LT ISSN: 1392-1320, DOI: 10.5755/j01.ms.21.4.9697 * page 583, right-hand column, paragraph 2. Exp. Details - page 585, left-hand column, paragraph 2; figures 1b,1c,1d,2b,2c,2d * | 1-10 | |
| X | US 2012/000395 A1 (KHADILKAR SHREESH ANANT [IN] ET AL) 5 January 2012 (2012-01-05) * paragraphs [0004], [0010] * | 11-13 | |

TECHNICAL FIELDS SEARCHED (IPC)

B01J
B01D
C04B
C09C
C01G

The present search report has been drawn up for all claims

| Place of search | Date of completion of the search | Examiner |
|---|---|---|
| Munich | 8 May 2019 | Beckmann, Oliver |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

## ANNEX TO THE EUROPEAN SEARCH REPORT
## ON EUROPEAN PATENT APPLICATION NO.

EP 18 21 1970

This annex lists the patent family members relating to the patent documents cited in the above-mentioned European search report.
The members are as contained in the European Patent Office EDP file on
The European Patent Office is in no way liable for these particulars which are merely given for the purpose of information.

08-05-2019

| Patent document cited in search report | | Publication date | Patent family member(s) | | Publication date |
|---|---|---|---|---|---|
| US 2012000395 | A1 | 05-01-2012 | AT | 507756 A1 | 15-07-2010 |
| | | | AU | 2009329258 A1 | 04-08-2011 |
| | | | CA | 2747330 A1 | 24-06-2010 |
| | | | EP | 2367769 A1 | 28-09-2011 |
| | | | ES | 2652591 T3 | 05-02-2018 |
| | | | SG | 172116 A1 | 28-07-2011 |
| | | | US | 2012000395 A1 | 05-01-2012 |
| | | | WO | 2010070426 A1 | 24-06-2010 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2009080647 A
- WO 2010012488 A1
- WO 2010012489 A1
- WO 2010012489 A

**Non-patent literature cited in the description**

- **WEIXIA DONG ; BIN SONG ; GAOLING ZHAO.** *Ceramics International,* 2013, vol. 39, 6795-6803
- **MEIDAN YE ; MENGYE WANG ; DAJIANG ZHENG.** Garden-like perovskite superstructures with enhanced photocatalytic activity. *Nanoscale,* 2014, vol. 6, 3576
- **GREY et al.** *American Mineralogist,* 2003, vol. 88, 1331-1335
- **BERAN.** *Canadian Mineralogist,* 1996, vol. 34, 803-809